# EUROPÄISCHE PATENTANMELDUNG

(11) **EP 3 546 740 A1**
(43) Veröffentlichungstag der Anmeldung: **02.10.2019**
(21) Anmeldenummer: 18191856.6
(22) Anmeldetag: 30.08.2018
(51) Int. Cl.: F02M 37/00, F02D 19/00, F02D 19/06

(54) **KRAFTSTOFFFÖRDER-SYSTEM FÜR KRAFTSTOFFANLAGEN**

(71) Anmelder: Befinal GmbH, 44627 Herne (DE)
(72) Erfinder: BECKER, Holger, 44627 Herne (DE)
(74) Vertreter: Frei Patent Attorneys

(57) **Zusammenfassung**

Die Erfindung ist auf dem Gebiet der Kraftstoffanlagen angesiedelt und betrifft insbesondere Systeme, mit denen Kraftstoffanlagen zu einem Betrieb mit zwei Kraftstoffen aufrüstbar sind (Bi-Fuel Kraftstoffanlage).

Aufgabe der Erfindung ist es, die Integrierbarkeit von Systemen in Kraftstoffanlagen zu verbessern, wobei die Systeme (50) zum Aufrüsten einer Kraftstoffanlage auf Bi-Fuel Betrieb ausgelegt sind und durch Verwendung eines Medienwandlers (53) weder eine eigene Hochdruckpumpe aufweisen noch auf das Durchlaufen der Hochdruckpumpe (63) der ursprünglichen Kraftstoffanlage durch den zusätzlichen Kraftstoff (51) angewiesen sind. Dazu weist das erfindungsgemässe System (50) mindestsens eines der folgenden Bauteile zur Minimierung von Druckschwankungen auf: mindestens ein Kompensationselement (10, 20); ein erstes Paar (40.1, 40.2) an 2/2-Wegeventilen und ein zweites Paar (41.1, 41.2) an 2/2-Wegeventilen; eine Pumpe, die den Brennstoff (51) in einem Niederdruckbereich des Systems mit einem zu einem Brennstoff-Förderdruck zusätzlichen Druck beaufschlägt; eine hydraulische Zwangsschaltung; ein Mittel zur Überwachung der Stellung eines auslenkbaren Elements (54) des Medienwandlers (53).

## Beschreibung

Die Erfindung betrifft das Gebiet der Kraftstoffanlagen für Kraftmaschinen, wie Verbrennungskraftmaschinen, insbesondere Verbrennungsmotoren mit Direkteinspritzung. Die Erfindung betrifft insbesondere Systeme, mit denen Kraftstoffanlagen zu einem Betrieb mit zwei Kraftstoffen aufrüstbar sind (Bi-Fuel Kraftstoffanlage).

Kraftstoffanlagen, welche eine Verbrennungskraftmaschine sowohl mit einem ersten Kraftstoff, wie beispielsweise Benzin, als auch mit einem zweiten Kraftstoff, wie beispielsweise Autogas (Liquefied Petroleum Gas, LPG), und gegebenenfalls zusätzlich mit einem dritten Kraftstoff versorgen, sind bekannt. Eine solche Kraftstoffanlage wird beispielsweise in DE 10 2008 043 930 A1 gelehrt.

Obwohl Verbrennungskraftmaschinen, die von einer Kraftstoffanlage mit verschiedenen Kraftstoffen versorgt wird, bereits sehr zuverlässig arbeiten, gibt es insbesondere bei Systemen, die beim Umbau einer Kraftstoffanlage auf Bi-Fuel Betrieb zum Einsatz kommen, wobei die Kraftstoffanlage ursprünglich für einen Betrieb mit nur einem Kraftstoff ausgelegt wurde, Verbesserungspotenzial. Einerseits kann ein Gebrauch der Komponenten der ursprünglichen Kraftstoffanlage zu Problemen führen, andererseits ist ein vollständiges, eigenes Fördersystem für den zweiten Kraftstoff oder eine Mehrzahl von zusätzlichen Komponenten zur Kompensation von nachteiligen Effekten, die durch den Gebrauch von Komponenten der ursprünglichen Kraftstoffanlage für den zweiten Kraftstoff entstehen, wegen zusätzlichem Gewicht, zusätzlichen Kosten und zusätzlichem Verbrauch nicht annehmbar.

WO 2017/174680 desselben Anmelders offenbart ein System, das insbesondere für den Umbau von Kraftstoffanlagen geeignet ist, die für einen Betreib mit nur einem Kraftstoff ausgelegt sind, und das verschiedene Probleme der aus dem Umbau entstehenden Bi-Fuel Kraftstoffanlage löst. Insbesondere offenbart WO 2017/174680 einen sogenannten Medienwandler, mit welchem der zweite Kraftstoff mit Hochdruck beaufschlagt und gefördert werden kann, ohne dass dafür ein Durchlaufen der Hochdruckpumpe des ersten Kraftstoffs oder eine zusätzliche Hochdruckpumpe von Nöten ist.

Erfahrungen mit Prototypen des in WO 2017/174680 gelehrten System zeigen, dass das System zuverlässig funktioniert. Allerdings hat auch dieses System noch Optimierungspotenzial, insbesondere im Hinblick auf das Zusammenarbeiten zwischen dem Medienwandler und Komponenten der ursprünglichen Kraftstoffanlage, beispielsweise der Hochdruckpumpe oder dem Einspritzsystem.

Es ist eine Aufgabe der Erfindung, ein verbessertes System zur Verfügung zu stellen, das in eine Kraftstoffanlage einer Kraftmaschine einsetzbar oder zu einer solchen ergänzbar ist, wodurch die Kraftstoffanlage durch mindestens zwei Kraftstoffe betreibbar wird. Insbesondere ist es eine Aufgabe der Erfindung, die Integrierbarkeit eines solchen Systems in eine Kraftstoffanlage zu verbessern.

Es ist insbesondere eine Aufgabe der Erfindung, ein System zur Verfügung zu stellen, das einen Medienwandler umfasst und das zu einem "runderen Laufen" einer Kraftstoffanlage mit integriertem System führt. Insbesondere kann das System mit Blick auf ein unerwünschtes Auftreten von Druckschwankungen optimiert sein.

Es ist ferner eine Aufgabe der Erfindung, ein System zur Verfügung zu stellen, das einen Medienwandler umfasst und eine erhöhte Zuverlässigkeit und Sicherheit aufweist.

Es ist ferner eine Aufgabe der Erfindung, ein System zur Verfügung zu stellen, mit welchem auf effiziente und auf die Kraftstoffe beziehungsweise die Kraftmaschine angepasste Weise unterschiedliche Kraftstoffe in einer Kraftstoffanlage gefördert werden können.

Mindestens eine dieser Aufgaben wird durch die Erfindung gelöst, wie sie in den Patentansprüchen definiert ist.

Der Begriff "Medienwandler" ist breit zu verstehen. Er steht für jedes Bauteil, dem ein durch eine Antriebseinheit mit Druck beaufschlagtes erstes Fluid zuführbar ist, und das eine Förderung eines zweiten Fluids ermöglicht oder verändert, indem es Druck vom ersten Fluid auf das zweite Fluid überträgt. Dabei kann es sich beim ersten und zweiten Fluid um denselben Stoff oder verschiedene Stoffe handeln.

Oftmals handelt es sich beim ersten Fluid um einen ersten Kraftstoff, wie beispielsweise Benzin, und beim zweiten Fluid um einen zweiten Kraftstoff, wie beispielsweise Autogas (LPG).

Zur besseren Unterscheidbarkeit wird der erste ("ursprüngliche") Kraftstoff nachfolgend als Fluid und der zweite Kraftstoff als Brennstoff bezeichnet.

Die Erfindung betrifft ein System zur Förderung eines Brennstoffes in einer Kraftstoffanlage, wobei das System eingerichtet ist, einen Bi-Fuel Betrieb der Kraftstoffanlage zu ermöglichen, und wobei das System eingerichtet ist, eine unerwünschte und in der Regel systembedingte Druckschwankung zu minimieren.

Das System weist einen Medienwandler auf, der dazu eingerichtet ist, einen Förderdruck eines Fluids, auf den Brennstoff zu übertragen. Dazu weist der Medienwandler ein auslenkbares Element, ein erstes Volumen für das Fluid ("erstes Fluid-Volumen"), ein erstes Volumen für den Brennstoff ("erstes Brennstoff-Volumen") auf.

Das System weist ferner eine erste Fluid-Zu-/Ableitung, das heisst eine erste Zu-/Ableitung zum beziehungsweise vom ersten Volumen für das Fluid, und eine erste Brennstoff-Zu-/Ableitung, das heisst eine erste Zu-/Ableitung zum beziehungsweise vom ersten Volumen für den Brennstoff, auf. Die erste Fluid-Zu-/Ableitung ist im System angeordnet, das Fluid dem erste Volumen für das Fluid zu- beziehungsweise abzuführen. Die erste Brennstoff-Zu-/Ableitung ist im System angeordnet, Brennstoff dem erste Volumen für den Brennstoff zu- beziehungsweise abzuführen.

Beim auslenkbaren Element handelt es sich insbesondere um einen Kolben, auch wenn ein anderes auslenkbares Element, beispielsweise eine Membran, ebenfalls denkbar ist. Das auslenkbare Element kann insbesondere in einem Hohlraum angeordnet sein und diesen in zwei Kammern teilen. In diesem Fall kann eine Kammer das erste Volumen für das Fluid und eine andere Kammer das erste Volumen für den Brennstoff bilden. Hohlraum, auslenkbares Element und Anordnung des auslenkbaren Elements im Hohlraum sind insbesondere derart, dass eine Auslenkung des auslenkbaren Elements das Volumen des ersten Volumens um den negativen Wert einer entsprechenden Volumenänderung des zweiten Volumens ändert und umgekehrt.

Der Kolben kann als Doppelkolben ausgebildet sein, wobei ein erstes Ende des Doppelkolbens in einem ersten Hohlraum angeordnet ist und ein zweites Ende des Doppelkolbens in einem zweiten Hohlraum angeordnet ist, und wobei eine Bewegung des ersten Endes zu einer entsprechenden Bewegung des zweiten Endes führt und umgekehrt.

In dieser Ausführungsform des Kolbens werden vier Volumen gebildet, die sich in zwei Volumenpaare aufteilen lassen. Innerhalb eines Volumenpaars verlaufen die Volumenänderungen bei der Auslenkung des Doppelkolbens synchron ab, während die Volumenänderung zwischen den Volumenpaaren asynchron ist. Das erste Volumen für das Fluid kann ein Volumen eines der beiden Volumenpaare sein und das erste Volumen für den Brennstoff kann ein Volumen des anderen der beiden Volumenpaare sein.

Es sind aber auch Ausführungsformen denkbar, bei denen sich die beiden Enden des Doppelkolbens nicht synchron bewegen. Das heisst, die beiden Enden bewegen sich asynchron oder in einer anderen Weise phasenverschoben zueinander.

Die erste Fluid-Zu-/Ableitung kann durch eine einzige Leitung in das erste Volumen für das Fluid realisiert sein.

Die erste Brennstoff-Zu-/Ableitung kann durch eine einzige Leitung in das zweite Volumen realisiert sein.

Die erste Fluid-Zu-/Ableitung kann zumindest teilweise durch ein Leitungspaar realisiert sein, wobei eine Leitung des Leitungspaars als reine Zuleitung angeordnet ist, und die andere Leitung des Leitungspaars als reine Ableitung angeordnet ist. "Reine Zuleitung" bedeutet in diesem Zusammenhang, dass die Leitung nur der Zuleitung von Fluid, nicht aber der Ableitung von Fluid dient. Entsprechend bedeutet "reine Ableitung", dass die Leitung nur der Ableitung, nicht aber der Zuleitung dient.

Die erste Brennstoff-Zu-/Ableitung kann zumindest teilweise durch ein Leitungspaar realisiert sein, wobei eine Leitung des Leitungspaars als reine Zuleitung angeordnet ist, und die andere Leitung des Leitungspaars als reine Ableitung angeordnet ist. "Reine Zuleitung" bedeutet in diesem Zusammenhang, dass die Leitung nur der Zuleitung von Brennstoff, nicht aber der Ableitung von Brennstoff dient. Entsprechend bedeutet "reine Ableitung", dass die Leitung nur der Ableitung, nicht aber der Zuleitung dient.

Zur kontrollierten Zuleitung des Fluids in das erste und - falls vorhanden - zweite Volumen, beziehungsweise zur kontrollierten Ableitung des Fluids aus dem ersten und - falls vorhanden - zweiten Volumen kann das System mindestens ein Steuerventil aufweisen, das auf einer der genannten Leitung angeordnet ist.

Das System weist ferner einen Anschluss auf, über den das System mit der Kraftstoffanlage verbindbar ist.

Insbesondere ist der Anschluss so angeordnet, dass eine Verbindung zwischen der Ableitung des ersten Volumens für den Brennstoff und einem Hochdruckbereich der Kraftstoffanlage herstellbar ist. Beim Hochdruckbereich der Kraftstoffanlage kann es sich insbesondere um einen Bereich der Kraftstoffanlage handeln, der in direkter Verbindung zu einem Einspritzsystem der Kraftstoffanlage steht.

Das System weist ferner ein Umschaltventil auf, das so im System angeordnet ist, dass es in einer ersten Stellung ein Leiten von Fluid auf den Anschluss verhindert. Das System ist dann so eingerichtet, dass es in dieser Stellung des Umschaltventils Brennstoff zum Anschluss fördert.

In einer zweiten Stellung kann das Umschaltventil ein Leiten von Fluid auf den Anschluss zulassen. Das System ist dann so eingerichtet, dass es in dieser Stellung des Umschaltventils keinen Brennstoff zum Anschluss fördert.

Insbesondere ist das Umschaltventil so im System angeordnet, dass - je nach Stellung des Umschaltventils - Fluid oder Brennstoff über das Umschaltventil zum Anschluss gefördert werden kann. In anderen Worten: Das Umschaltventil ist dem Anschluss vorgeschalten und das System, insbesondere ein zum System gehörendes Leitungssystem, ist eingerichtet, dass sowohl Fluid als auch Brennstoff über das Umschaltventil zum Anschluss gefördert werden kann.

Ferner kann das Umschaltventil sowohl dem ersten und - falls vorhanden - einem zweiten Volumen für den Brennstoff als auch der Hochdruckpumpe für das Fluid nachgeschalten sein. Das Umschaltventil kann insbesondere Zuleitungen zur ersten und - falls vorhanden - zweiten Fluid-Zu-/Ableitung nachgeschalten sein. Ausführungsformen mit einem zweiten Volumen für den Brennstoff werden weiter unten im Text beschrieben.

Ausführungsformen mit einer zweiten Fluid-Zu-/Ableitung werden weiter unten im Text beschrieben.

In einer Ausführungsform ist das System so geschaltet, dass es bei fehlendem Steuersignal auf das Umschaltventil keinen Brennstoff zum Anschluss fördert. Insbesondere verhindert das Umschaltventil das Fördern von Brennstoff zum Anschluss, wenn es nicht bestromt ist. Dies kann die Sicherheit einer Kraftstoffanlage mit eingebautem System erhöhen, indem bei einem gravierendem Problem der Kraftstoffanlage, beispielsweise nach einem Unfall oder bei einem Defekt im elektrischen System, der zum Auslösen einer Sicherung geführt hat, kein Brennstoff mehr gefördert wird. Ergänzend kann das System gemäss dieser Ausführungsform eingerichtet sein, das (Brennstoff-) System abzuschalten und vom Rest der Kraftstoffanlage zu trennen.

Ergänzend kann das Umschaltventil so geschalten sein, dass es bei fehlendem Steuersignal eine Förderung von Fluid auf den Anschluss zulässt. Dies hat den Vorteil, dass bei einer Störung der Kraftstoffanlage oder des Systems, die Kraftstoffanlage in ihren ursprünglichen, auf Fluid-Versorgung basierenden Zustand übergeht. Insbesondere kann das System eingerichtet sein, ein am Umschaltventil anliegendes Steuersignal zurückzusetzen (das heisst aufzuheben), wenn eine Störung im System oder in der Kraftstoffanlage festgestellt wird. Insbesondere wird ein am Umschaltventil anliegender Steuerstrom auf Null gesetzt.

Ein erfindungsgemässes System weist ferner mindestens eines der nachfolgenden Merkmale auf, um die unerwünschte und in der Regel systembedingte Druckschwankung zu minimieren:
- Das System kann ein Kompensationselement und eine Zuleitung zum Kompensationselement aufweisen, wobei die Zuleitung dem Umschaltventil vorgeschalten ist.
   Insbesondere kann das Kompensationselement zum Umschaltventil parallel geschalten sein.
   Ein auf diese Weise angeordnetes Kompensationselement, ist in der Lage, Druckstösse, die eingangsseitig der ersten Fluid-Zu-/Ableitung auftreten, zu minimieren.
   In einer Ausführungsform, weist der Medienwandler ein zweites Volumen für das Fluid ("zweites Fluid-Volumen") und eine zweite Fluid-Zu-/Ableitung auf.
   Die zweite Fluid-Zu-/Ableitung ist angeordnet, Fluid dem zweiten Volumen für das Fluid zu- beziehungsweise abzuführen.
   Die zweite Fluid-Zu-/Ableitung kann in einer der oben in Zusammenhang mit der ersten Fluid-Zu-/Ableitung beschriebenen Weisen realisiert sein.
   Die zweite Fluid-Zu/Ableitung kann wie die erste Fluid-Zu-/Ableitung realisiert sein.
   Das System kann ein bewegliches Element aufweisen, wobei das bewegliche Element, erstes Volumen für das Fluid und zweites Volumen für das Fluid so angeordnet sind, dass eine durch eine Positionsänderung des beweglichen Elements verursachte Vergrösserung des ersten Volumens für das Fluid mit einer Verkleinerung des zweiten Volumens für das Fluid einhergeht und umgekehrt.
   Beispielseise kann der Doppelkolben oder ein Teil davon, insbesondere das erste oder zweite Ende des Doppelkolbens, das bewegliche Element bilden. In diesem Fall kann das erste Volumen für das Fluid ein Volumen eines der beiden Volumenpaare sein und das zweite Volumen für das Fluid ein Volumen des anderen, eine asynchrone Volumenänderung aufweisenden Volumenpaares sein.
   Insbesondere können erstes und zweites Volumenpaar für das Fluid in demselben Hohlraum angeordnet und durch ein Ende des Doppelkolbens voneinander getrennt sein.
   In dieser Ausführungsform kann das System ein erstes Steuerventil zur Kontrolle der Zufuhr des Fluids in das erste Volumen für das Fluid und ein zweites Steuerventil zur Kontrolle der Zufuhr des Fluids in das zweite Volumen für das Fluid aufweisen.
   Erstes und zweites Steuerventil sind insbesondere dem Umschaltventil vorgeschalten, wobei eine Fluid-Zuleitung zum ersten Steuerventil und eine Fluid-Zuleitung zum zweiten Steuerventil in direkter Verbindung zur Zuleitung zum Kompensationselements stehen.
   Eine solche Anordnung von erstem Steuerventil, zweitem Steuerventil und Zuleitung zum Kompensationselement ist in der Lage, Druckstösse, die beim Umschalten des ersten und zweiten Steuerventils auftreten, zu minimieren.
   Das System kann ferner ein Kompensationselement-Ventil aufweisen, das in der Zuleitung zum oder in einer Ableitung vom Kompensationselement angeordnet ist. Dieses Kompensationselement-Ventil kann insbesondere dazu eingerichtet sein, ein Ableiten von Fluid aus dem Kompensationselement heraus zu verhindern, falls die Kraftstoffanlage gedrosselt wird, beispielsweise indem Gas zurückgenommen wird.
   Das Kompensationselement-Ventil kann so geschalten sein, dass das Kompensationselement bei Drosselung der Kraftstoffanlage, insbesondere bei Stillstand, vom System abgekoppelt ist. Dadurch bleibt der Druck im Kompensationselement im gedrosselten Betriebszustand, beziehungsweise im Stillstand, hoch. Das Kompensationselement kann dann so mit einem Sensor der ursprünglichen Kraftstoffanlage interagieren, dass ein Angehen einer Motorkontrollleuchte verhindert wird.
   Beim Kompensationselement kann es sich insbesondere um einen Kompensationskolben oder einen Druckspeicher, insbesondere einen "Puffer", handeln. Der Kompensationskolben kann einen Druckspeicher aufweisen.
   Das Kompensationselement kann ein Hydraulikdämpfer in einer der nachfolgenden Konfigurationen sein oder umfassen: ein Membranspeicher mit einer Stickstoffvorfüllung, ein hydraulischer Kolben mit einer Federvorspannung, eine Druckkugel im Kreislauf der zu dämpfenden Flüssigkeit. Auch denkbar ist eine Druckdose als Membran.
- Der Medienwandler weist das zweite Volumen für das Fluid und das System die zweite Fluid-Zu-/Ableitung auf. Die erste Fluid-Zu-/Ableitung weist einen Bereich auf, der nur der Zuleitung dient, und einen Bereich, der nur der Ableitung dient. Analog weist die zweite Fluid-Zu-/Ableitung einen Bereich auf, der nur der Zuleitung dient, und einen Bereich, der nur der Ableitung dient.
   Zur Minimierung der unerwünschten Druckschwankung weist das System ferner ein erstes Paar an 2/2-Wegeventilen und ein zweites Paar an 2/2-Wegeventilen auf, wobei:
   o eines der beiden 2/2-Wegeventile des ersten Paars an 2/2-Wegeventilen am Bereich der ersten Fluid-Zu-/Ableitung angeordnet ist, der nur der Zuleitung dient, und das andere der beiden 2/2-Wegeventile des ersten Paars an 2/2-Wegeventilen am Bereich der ersten Fluid-Zu-/Ableitung angeordnet ist, der nur der Ableitung dient;
   o eines der beiden 2/2-Wegeventile des zweiten Paars an 2/2-Wegeventilen am Bereich der zweiten Fluid-Zu-/Ableitung angeordnet ist, der nur der Zuleitung dient, und das andere der beiden 2/2-Wegeventile des zweiten Paars an 2/2-Wegeventilen am Bereich der zweiten Fluid-Zu-/Ableitung angeordnet ist, der nur der Ableitung dient.
   Ein Einsatz von vier 2/2-Wegeventilen kann beispielsweise mit Blick auf die Systemkomplexität, den Platzbedarf und die Kosten nachteilig gegenüber zwei 3/2-Wegeventilen erscheinen. Andererseits ermöglicht die Verwendung des ersten und zweiten Paares an 2/2-Wegeventilen eine optimierte Kontrolle der Zu- und Ableitung von Fluid in das erste und zweite Volumen für Fluid.
   Insbesondere können die Übergänge der Ventile so gesteuert werden, dass ein Druckeinbruch in der Region eines Umschaltpunktes des auslenkbaren Elements (sogenanntes Umschaltloch), das heisst an einer Position, in welcher das auslenkbare Element kurzeitig stillsteht, beziehungsweise bei der das auslenkbare Element seine Bewegungsrichtung ändert, minimiert wird. Insbesondere können zwei oder mehr Übergänge so relativ zu einander gesteuert werden, dass es eine Überschneidung der Öffnungszeiten gibt.
   Das System kann eine Steuerung aufweisen, die eingerichtet ist, die genannten 2/2-Wegeventile so zu steuern, dass zumindest das Umschaltloch minimiert wird.
- Das System weist ein Kompensationselement auf, wobei das Kompensationselement dem ersten Volumen für den Brennstoff nachgeschalten ist.
   Insbesondere in Ausführungsformen, in welchen das Umschaltventil so im System angeordnet, dass -je nach Stellung des Umschaltventils - Fluid oder Brennstoff über das Umschaltventil zum Anschluss gefördert werden kann, kann das Kompensationselement dem Umschaltventil nachgeschalten sein.
   Das Kompensationselement kann am oder in unmittelbarer Umgebung des Anschlusses angeordnet sein. "In unmittelbarer Umgebung des Anschlusses" bedeutet in diesem Zusammenhang, dass kein anderes Element (ausser Elemente des Leitungssystems) zwischen dem Kompensationselement und dem Anschluss angeordnet sind.
   Das Kompensationselement kann eingerichtet sein, sowohl Druckvariationen im geförderten Fluid als auch Druckvariationen im geförderten Brennstoff zu minimieren.
   Je nachdem wie der Medienwandler gesteuert wird, um den Förderdruck des Fluids auf den Brennstoff zu übertragen, weist der zum Anschluss geförderte Brennstoff eine oder mehrere unerwünschte Druckschwankungen auf. Beispielsweise:
   ∘ Druckstösse der Antriebseinheit, die das Fluid mit dem Förderdruck beaufschlagen, können zu Druckstössen des zum Anschluss geförderten Brennstoffes führen. Diese Druckstösse des Brennstoffes können je nach konkreter Realisierung des Medienwandlers und seiner Steuerung, insbesondere der fluidseitig verwendeten Zu-/Ableitung oder der fluidseitig verwendeten Zuleitungen und des fluidseitig verwendeten Steuerventils oder der fluidseitig verwendeten Steuerventile, mehr oder minder ausgeprägt sein.
      Die Realisierung des Medienwandlers umfasst beispielsweise die Realisierung des auslenkbaren Elements und/oder die Dimensionierung zweier Volumina des Medienwandlers relativ zu einander, beispielsweise des ersten Volumen für das Fluid und des ersten Volumen für den Brennstoff.
      Die fluidseitigen Zu-/Ableitungen umfassen beispielsweise die erste Fluid-Zu-/Ableitung und optional die zweite Fluid-Zu-/Ableitung. Die fluidseitigen Steuerventile umfassen beispielsweise das erste Steuerventil zur Kontrolle der Zufuhr des Fluids in das erste Volumen für das Fluid, optional das zweite Steuerventile zur Kontrolle der Zufuhr des Fluids in das zweite Volumen für das Fluid und optional das Umschaltventil.
      Bei der Antriebseinheit kann es sich insbesondere um eine Hochdruckpumpe handeln. Insbesondere kann es sich um die Kraftstoffhochdruckpumpe für das Fluid der ursprünglichen Kraftstoffanlage handeln.
   ∘ Druckschwankungen, die vom Schalten des oder der fluidseitigen Steuerventile herrühren.
      Insbesondere in Ausführungsformen, in denen der Medienwandler das erste Volumen für das Fluid und das zweite Volumen für das Fluid aufweisen und bei denen das System ein erstes 3/2-Wegeventil zur Steuerung der Zu- und Ableitung von Fluid in das erste Volumen und ein zweites 3/2-Wegeventil zur Steuerung der Zu- und Ableitung von Fluid in das zweite Volumen aufweisen, kann der Brennstoff, der zum Anschluss gefördert wird, unerwünschte Druckabfälle aufweisen.
      Wie bereits dargelegt, kann die Verwendung von zwei 3/2-Wegeventilen zur Steuerung des Medienwandlers beispielsweise mit Blick auf die Systemkomplexität, den Platzbedarf und die Kosten von Vorteil sein. Allerdings ist die Verwendung von zwei 3/2-Wegeventilen zur Steuerung des Medienwandlers mit Blick auf ein "rundes Laufen" des Medienwandlers und damit der Kraftstoffanlage nachteilig. Insbesondere lässt sich das sogenannte Umschaltloch nur begrenzt minimieren.
   Das dem ersten Volumen für den Brennstoff nachgeschalte, beispielsweise wie oben aufgezeigt nachgeschaltete, Kompensationselement kann eingerichtet sein, Druckvariationen, insbesondere Druckabfälle, die von der Verwendung zweier 3/2-Wegeventilen zur Steuerung des Medienwandlers herrühren, zu minimieren.
   Beim Kompensationselement kann es sich insbesondere um einen Kompensationskolben oder einen Druckspeicher, insbesondere einen "Puffer", handeln. Der Kompensationskolben kann einen Druckspeicher aufweisen.
   Das Entleeren des Druckspeichers kann über ein Rückschlagventil mit Bypass erfolgen.
   Das Kompensationselement kann als Miniaturdämpfer ausgelegt werden.
   Insbesondere kann das Kompensationselement ein Hydraulikdämpfer in einer der nachfolgenden Konfigurationen sein oder umfassen: ein Membranspeicher mit einer Stickstoffvorfüllung, ein hydraulischer Kolben mit einer Federvorspannung, eine Druckkugel im Kreislauf der zu dämpfenden Flüssigkeit. Auch denkbar ist eine Druckdose als Membran.
- Das System kann ein Mittel zur Überwachung einer Stellung des auslenkbaren Elements aufweisen, wobei dieses Mittel einen magnetischen Bereich am auslenkbaren Element umfasst. Die überwachte Stellung ist von einer Stellung einer maximalen Auslenkung und einer Ruhestellung des auslenkbaren Elements verschieden. Allerdings kann das Mittel zur Überwachung eingerichtet sein, auch die Stellung einer maximalen Auslenkung und/oder die Ruhestellung festzustellen.
   Beispielsweise kann es sich um ein Mittel zur kontinuierlichen oder quasikontinuierlichen Überwachung der Stellung des auslenkbaren Elements handeln. Eine quasi-kontinuierliche Überwachung liegt beispielsweise dann vor, wenn zwischen der Ruhestellung und der Stellung einer maximalen Auslenkung mindestens zwei weitere Stellungen überwacht werden.
   Insbesondere kann der magnetische Bereich in einer Region des auslenkbaren Elements angeordnet sein, die einem Endbereich des auslenkbaren Elements in Auslenkungsrichtung entspricht. Beispielsweise kann die Region eine Region sein, die maximal ausgelenkt wird.
   In Ausführungsformen, in welchen das auslenkbare Element ein Kolben ist, kann der magnetische Bereich an einem Kolbenkopf angeordnet sein.
   Das Mittel zur kontinuierlichen Überwachung kann ferner einen Wegaufnehmer aufweisen, der parallel zur Auslenkrichtung beziehungsweise Bewegungsrichtung des auslenkbaren Elements angeordnet ist.
   Neben der Stellung kann eine Geschwindigkeit und/oder eine Frequenz und/oder eine Arbeitsrichtung des auslenkbaren Elements überwacht werden.
   In Ausführungsformen weist das System eine Steuerung auf.
   Die Steuerung kann eingerichtet sein, die überwachte Stellung und allenfalls weitere überwachte Grössen auszulesen. Die Steuerung kann ferner eingerichtet sein, basierend auf den ausgelesen Grössen Steuersignale zu generieren oder anzupassen.
   Alternativ oder ergänzend kann die Steuerung eingerichtet sein, aus den überwachten Grössen Rückschlüsse auf den Betriebszustand des Systems zu ziehen.
   Alternativ oder ergänzend kann die Steuerung eingerichtet sein, Verbrauchsdaten zu erheben, beispielsweise indem sie basierend auf den überwachten Grössen Volumen- und/oder Durchflussberechnungen anstellt.
   Es ist allerdings auch denkbar, dass die oben genannten und auf den überwachten Grössen basierenden Funktionen der Steuerung durch das Einlesen von Daten eines oder mehrerer Sensoren geschieht, die vom Mittel zur Überwachung der Stellung verschieden sind.
- Im Betrieb heizt sich der Medienwandler durch unterschiedliche Einflüsse auf, beispielsweise durch Stauwärme oder Wärmeeintrag über das Fluid, insbesondere wenn das Fluid Wärme der Kraftstoffmaschine ausgesetzt ist. Dies kann dazu führen, dass sich im Brennstoff, der sich im Niederdruckbereich des Systems, insbesondere im Medienwandler-Vorlauf, befindet, Dampfblasen bilden. Dampfblasenbildung im Medienwandler-Vorlauf kann zu einem unruhigen Arbeiten des Medienwandlers und somit der Kraftstoffanlage, in die das System eingebaut ist, führen.
   Die Dampfblasenbildung ist besonders ausgeprägt nach dem Ausschalten der Kraftstoffanlage bei warmem Medienwandler. Dies kann zu Problemen beim Neustart und zu einem unbefriedigendem Laufen des Systems und somit der Kraftstoffanlage unmittelbar nach dem Neustart führen.
   Je nach Führung des Leitungssystems ist auch eine Dampfblasenbildung denkbar, die nicht durch den Medienwandler sondern durch ein anderes Element des Systems, der Kraftstoffanlage oder der Kraftstoffmaschine verursacht ist. Entsprechend kann die Dampfblasenbildung nicht nur in der Region des Medienwandlers auftreten, sondern auch an anderen Stellen des Niederdruckbereichs des Brennstoffes.
   Um eine Dampfblasenbildung des Brennstoffs im Niederdruckbereich des Brennstoffes, insbesondere beim Ansaugen des Brennstoffes in den Medienwandler, das heisst vor oder in der Zuleitung zum ersten und - falls vorhanden - zum zweiten Volumen für den Brennstoff, zu verhindern, kann das System eine Pumpe aufweisen, die den Brennstoff mit einem zum Förderdruck zusätzlichen Druck beaufschlagt.
   Das System kann also eine Pumpe aufweisen, die eingerichtet ist, den Brennstoff im Niederdruckbereich des Systems mit einem zum Brennstoff-Förderdruck zusätzlichen Druck zu beaufschlagen, um einen Wärmeeinfluss auf den Brennstoff zu kompensieren.
   Der zusätzliche Druck kann insbesondere ausreichen, eine Dampfblasenbildung im Niederdruckbereich des Brennstoffes aufgrund des Wärmeeinflusses zu verhindern.
   Insbesondere kann die Pumpe eingerichtet sein, den Brennstoff im Niederdruckbereich des Systems mit einem zum Brennstoff-Förderdruck zusätzlichen Druck zu beaufschlagen, wobei der zusätzliche Druck von einer gemessenen oder vermuteten Temperatur im System abhängt.
   In Ausführungsformen, in denen das System die Pumpe aufweist, die den Brennstoff mit einem zum Förderdruck zusätzlichen Druck beaufschlagt, weist das System insbesondere einen Brennstoff-Tank mit einer Brennstoff-Förderpumpe auf, wobei es die Brennstoff-Förderpumpe ist, die den Förderdruck festlegt.
   Der zusätzliche Druck kann eine Druckerhöhung des Förderdrucks sein, wobei die Druckerhöhung auf eine erwartete maximale Temperatur eines Elements des Systems, der Kraftstoffanlage oder der Kraftstoffmaschine, insbesondere des Medienwandlers, abgestimmt ist. Bei der Druckerhöhung kann es sich um eine Druckerhöhung handeln, die im Betrieb der Kraftstoffanlage, beziehungsweise des Systems, konstant ist. Das heisst, der Brennstoff wird im Niederdruckbereich mit dem zusätzlichen Druck beaufschlagt, sobald die Kraftstoffanlage eingeschalten wird und bleibt dann unverändert bis die Kraftstoffanlage wieder ausgeschalten wird.
   Alternativ kann der zusätzliche Druck auch von einer Temperaturmessung abhängen. Dazu kann das System einen Temperatursensor aufweisen, der die momentane Temperatur eines Elements des Systems, der Kraftstoffanlage oder der Kraftstoffmaschine, insbesondere des Medienwandlers misst. Insbesondere kann die Pumpe eingerichtet sein, den zum Förderdruck zusätzlichen Druck in Abhängigkeit der gemessenen Temperatur zu verändern.
   Ergänzend kann das System einen zweiten Temperatursensor aufweisen und eingerichtet sein, eine Temperaturdifferenz zwischen dem Element, dessen Temperatur vom Temperatursensor gemessen wird, und dem Element, dessen Temperatur vom zweiten Temperatursensor gemessen wird, zu bestimmen. Die Pumpe kann eingerichtet sein, den zum Förderdruck zusätzlichen Druck in Abhängigkeit der Temperaturdifferenz zu verändern.
   Alternativ oder ergänzend kann das System einen Drucksensor aufweisen, der den Druck im Medienwandler-Vorlauf misst.
   Folgende Faustregel kann verwendet werden, um den zusätzlichen Druck abzuschätzen, der nötig ist, um eine Dampfblasenbildung bei Erwärmung des Brennstoffes zu vermeiden: Bei einer Temperaturerhöhung von 3 Grad Celsius ist eine Druckerhöhung des Brennstoffs von etwa 1 Bar nötig.
   Eine Umsetzung dieser Faustregel kann dazu verwendet werden, dass die Wahrscheinlichkeit von Dampfblasenbildung bei einer Temperaturerhöhung des Brennstoffes etwa gleich gross bleibt, wie die Wahrscheinlichkeit von Dampfblasenbildung bei unter Förderdruck stehendem und Normaltemperatur aufweisendem Brennstoff.
   Die Pumpe kann insbesondere eingerichtet sein, den Brennstoff mit einem zusätzlichen Druck von bis zu 25 Bar, insbesondere bis zu 20 Bar, beispielsweise bis zu 15 Bar zu beaufschlagen.
   Das heisst, die Pumpe kann eingerichtet sein, den Förderdruck zu erhöhen, insbesondere um bis zu 25, 20 oder 15 Bar zu erhöhen.
   In einer Ausführungsform handelt es sich bei der Pumpe, die den Brennstoff mit dem zusätzlichen Druck beaufschlägt, um die Brennstoff-Förderpumpe. Mit anderen Worten: Die Brennstoff-Förderpumpe ist eingerichtet, den zusätzlichen Druck zu erzeugen.
   In dieser Ausführungsform und für den Regelfall, dass der Medienwandler den Brennstoff in seinem Vorlauf erwärmt, kann die Faustregel wie folgt wiedergegeben werden: Die Gefahr einer Blasenbildung bei einem Temperaturunterschied zwischen Brennstoff-Tank und Medienwandler von x Grad Celsius (wobei der Medienwandler wärmer ist als das Brennstoff-Tank) kann durch eine Druckerhöhung des Brennstoffs im Medienwandler-Vorlauf von etwa x/3 Bar minimiert werden.In der Ausführungsform, in der die Pumpe zur Beaufschlagung des Brennstoffes mit zusätzlichem Druck die Brennstoff-Förderpumpe ist, kann das System einen am Brennstoff-Tank angebrachten Temperatursensor und einen zweiten, am Medienwandler angebrachten Temperatursensor aufweisen.
   Ergänzend zur Pumpe, die den Brennstoff mit dem zum Förderdruck zusätzlichen Druck beaufschlagt, kann das System ein Leitungssystem aufweisen, das eingerichtet ist, den erhöhten Druck zumindest in einem Teilbereich aufrechtzuerhalten. Beim Teilbereich handelt es sich insbesondere um einen Bereich des Leitungssystems, der zwischen der Pumpe und dem ersten und - falls vorhanden - zweiten Volumen für den Brennstoff angeordnet ist.
   Insbesondere kann das Leitungssystem im Niederdruckbereich des Brennstoffes, insbesondere in besagtem Teilbereich, ein geschlossenes Leitungssystem sein. Das heisst, Brennstoff, der aus einem Brennstoff-Tank in den Niederdruckbereich, beziehungsweise in den besagten Teilbereich, gefördert wurde, kann nur zum ersten und - falls vorhanden - zweiten Volumen für den Brennstoff gefördert werden.
   Insbesondere verfügt das System gemäss dieser Ausführungsform im Medienwandler-Vorlauf über keine Rücklaufleitung zum Brennstoff-Tank.
   Die Erhöhung des Brennstoffdrucks im Medienwandler-Vorlauf hat den Vorteil, dass eine Dampfblasenbildung im Medienwandler-Vorlauf verhindert wird und nur flüssiger Brennstoff in das erste und - falls vorhanden - zweite Volumen für den Brennstoff eingespeist wird. Dies führt unter anderem zu einem runderen Laufen des Medienwandlers und somit des Systems, beziehungsweise der Kraftstoffanlage, in die das System integriert ist.
- Das System kann eine Kühlvorrichtung aufweisen mit der ein Aufheizen von einem Teil der Kraftstoffanlage, des Systems oder von einem Teil des Systems minimiert werden. Dadurch kann insbesondere die Gefahr von Dampfblasenbildung vermindert oder eliminiert werden. Dies trägt, beispielsweise wie zuvor beschreiben, unter anderem zu einem "runderen Laufen" der Kraftstoffanlage mit integriertem System bei.
   Insbesondere kann das System mindestens einen Strömungskanal aufweisen, in den Brennstoff einspeisbar ist und der eingerichtet ist, eine Druckreduktion des Brennstoffes zuzulassen.
   Der Strömungskanal kann aus einem Niederdruckbereich des Brennstoffs, insbesondere dem Medienwandler-Vorlauf, und/oder einem Hochdruckbereich des Brennstoffs gespeist werden.
   Der Strömungskanal kann eine Düse und/oder eine Blende umfassen.
   Der eingespeiste Brennstoff kann flüssiger Brennstoff sein. Die Druckreduktion kann derart sein, dass der Brennstoff in einen gasförmigen Zustand übergeht. Die Kühlwirkung wird insbesondere durch einen solchen flüssig-gas Aggregatszustandswechsel bewirkt.
   Das System kann eine Rücklaufleitung aufweisen, die so angeordnet ist, dass Brennstoff, insbesondere gasförmiger Brennstoff, aus dem Strömungskanal in den Brennstoff-Tank zurückführbar ist.
   Die Kühlvorrichtung kann insbesondere so angeordnet sein, dass der Medienwandler gekühlt wird.
- Das System kann eine hydraulische Zwangsschaltung aufweisen, wobei das auslenkbare Element einen magnetischen Bereich aufweist und die hydraulische Zwangsschaltung ausgelöst wird, wenn der magnetische Bereich eine vordefinierte Position einnimmt oder durchquert.
   Das System kann ein Bauteil aufweisen, das sensitiv ist für ein magnetisches Feld ist, das durch den magnetischen Bereich erzeugt wird. Das Bauteil kann beispielsweise ein magnetoresistives Element sein.
   Das Bauteil oder eine damit verbundene Steuerung kann eingerichtet sein, einen Schaltvorgang auszulösen, wenn ein bestimmtes magnetisches Feld am Ort des Bauteils vorherrscht. Insbesondere kann das Bauteil oder die damit verbundene Steuerung den Schaltvorgang auslösen, wenn am Bauteil ein vordefiniertes magnetisches Feld anliegt, beispielsweise wenn eine bestimmte Feldstärke erreicht oder überschritten wird.
   In einer Ausführungsform weist das System ein Magnetventil auf. Magnetventil und magnetischer Bereich können so relativ zueinander angeordnet sein, dass der magnetische Bereich, wenn er die vordefinierte Position einnimmt oder durchquert, eine magnetische Kraft auf das Magnetventil ausübt, die zum Schalten des Magnetventils ausreicht.
   Alternativ oder ergänzend kann das System einen Druckspeicher aufweisen. Der Druckspeicher kann eingerichtet sein, ein unter Druck stehendes Medium in Richtung eines Ventils abzulassen, sobald das Bauteil, das sensitiv für das magnetisches Feld ist, das bestimmte magnetische Feld detektiert.
   Das abgelassene Medium kann Eigenschaften aufweisen, die ein Schalten des Ventils bewirken. Insbesondere können Druck und Menge des abgelassenen Mediums derart sein, dass das Ventil schaltet.
   Der magnetische Bereich kann einen Pilotimpuls erzeugen, sobald er die vordefinierte Position einnimmt oder durchquert, wobei die für den eigentlichen Schaltvorgang benötigte Kraft vom Medium ausgeübt wird, die aus dem Druckspeicher abgelassen wird.
   Der magnetische Bereich kann in einer Region des auslenkbaren Elements angeordnet sein, der einem Endbereich des auslenkbaren Elements in Auslenkungsrichtung entspricht. Beispielsweise kann die Region eine Region sein, die maximal ausgelenkt wird.
   In Ausführungsformen, in welchen das auslenkbare Element ein Kolben ist, kann der magnetische Bereich an einem Kolbenkopf angeordnet sein.
   Eine hydraulische Zwangsschaltung kann nicht nur zum runderen Laufen der Kraftstoffanlage mit integriertem System führen, sondern auch die Komplexität des Systems reduzieren. Insbesondere kann die Komplexität der Systemsteuerung und die Anzahl benötigter elektrischer Bauteile reduziert werden.
   Insbesondere Systeme mit hydraulischer Zwangsschaltung können ein Kompensationselement in einer der zuvor beschriebenen Ausführungsform aufweisen, um beim Schalten auftretende Druckschwankungen, insbesondere Druckabfälle, zu minimieren.
- Das auslenkbare Element weist gegen das erste Volumen für das Fluid hin eine erste Fluid-Stirnfläche auf und gegen das erste Volumen für den Brennstoff hin eine erste Brennstoff-Stirnfläche auf. Besagte Stirnflächen sind insbesondere so angeordnet, dass die Bewegungsrichtung des auslenkbaren Elements eine Normale zu den Stirnflächen bildet.
   Um ein rundes und zuverlässiges Laufen der Kraftstoffmaschine unter Brennstoff sicherzustellen, kann die Fläche der ersten Fluid-Stirnfläche von der Fläche der ersten Brennstoff-Stirnfläche verschieden sein.
   Die Stirnflächen entsprechen insbesondere einem Durchmesser des Hohlraums, in welchem sie sich befinden.
   Das heisst, der Betrag des Volumens, um welchen sich das erste Volumen für das Fluid bei einer Auslenkung des auslenkbaren Elements ändert, kann verschieden vom Betrag des Volumens sein, um welchen sich das erste Volumen für den Brennstoff bei dieser Auslenkung des auslenkbaren Elements ändert.
   Insbesondere kann sich die Fläche der ersten Brennstoff-Stirnfläche so von der Fläche der ersten Fluid-Stirnfläche unterscheiden, dass pro Verbrennungszyklus dasjenige Volumen an Brennstoff der Kraftstoffmaschine zugeführt wird, die aufgrund der unterschiedlichen Eigenschaften zwischen Fluid und Brennstoff pro Verbrennungszyklus nötig ist.
   In anderen Worten: Der Medienwandler kann auch ein Volumen- und/oder Druck-Wandler sein.
   Insbesondere kann der Medienwandler als Druck-Volumen-Wandler eingerichtet sein. Das heisst, der Fluid-Druck auf der Fluidseite des Medienwandlers und/oder der Förderdruck des Brennstoffes ist so auf ein Verhältnis der Flächen der ersten Brennstoff-Stirnfläche und der ersten Fluid-Stirnfläche abgestimmt, dass der Druck des mit Hochdruck beaufschlagte Brennstoff einem Solldruck der Kraftmaschine entspricht, obwohl das pro Kompressionszyklus geförderte Volumen des mit Hochdruck beaufschlagten Brennstoffs vom Fluid-Volumen verschieden ist.
   Falls es sich beim Fluid um Benzin und beim Brennstoff um LPG handelt, ist beispielsweise eine LPG-Einspritzung pro Verbrennungszyklus nötig, die vom Volumen her um etwa 15-35% höher ist als das Benzin-Volumen, das pro Verbrennungszyklus nötig ist. In anderen Worten, der Mehrverbrauch von LPG zu Benzin beträgt etwa 15-35%. Die erste Brennstoff-Stirnfläche kann folglich im Vergleich zur ersten Fluid-Stirnfläche entsprechend vergrössert sein. Ergänzend kann die Leistung der Hochdruckpumpe die das Fluid (im Beispiel Benzin) und/oder die Leistung der Brennstoff-Förderpumpe so erhöht werden, dass der im Volumen vergrösserte Brennstoff nach wie vor den von der Kraftstoffmaschine geforderten Solldruck aufweist.
   In einer Ausführungsform ist das auslenkbare Element als Doppelkolben ausgebildet und es die Leistung der Brennstoff-Förderpumpe, die im Vergleich zu Ausführungsformen mit flächenmässig identischer erster Brennstoff-Stirnfläche und erster Fluid-Stirnfläche erhöht ist, um die durch eine Vergrösserung des Fördervolumens verursachte Druckreduktion des Brennstoffes zu kompensieren. Dazu kann das System eine Förderpumpe aufweisen, die eingerichtet ist, den Brennstoff mit dem zur Förderung nötigen Druck und zusätzlich mit einem Druck, der zur Kompensation der besagten Druckreduktion nötig ist, zu beaufschlagen. Es ist eine Erkenntnis der Erfindung, dass diese Ausführungsform funktioniert, weil der Medienwandler mit Doppelkolben als Durckaddierer wirkt.
   Der zusätzliche Druck zur Kompensation der besagten Druckreduktion kann zusätzlich dazu dienen, die zuvor beschriebene Dampfblasenbildung im Medienwandler-Vorlauf zu reduzieren. Die Brennstoff-Förderpumpe kann eingerichtet sein, den Brennstoff mit einem zusätzlichen Druck zu beaufschlagen, der sowohl zur Kompensation der besagten Druckreduktion als auch zur Vermeidung von Blasenbildung im Medienwandler-Vorlauf ausreichend ist.
   In einer Ausführungsform, die ein zweites Volumen für das Fluid und ein zweites Volumen für den Brennstoff aufweisen, weist das auslenkbare Element eine zweite Fluid-Stirnfläche und eine zweite Brennstoff-Stirnfläche auf, wobei die zweite Fluid-Stirnfläche gegen das zweite Volumen für das Fluid hin ausgerichtet ist und die zweite Brennstoff-Stirnfläche gegen das zweite Volumen für den Brennstoff hin ausgerichtet ist.
   In solchen Ausführungsformen sind bevorzugt die Fläche der zweiten Fluid-Stirnfläche mit der Fläche der ersten Fluid-Stirnfläche und die Fläche der zweiten Brennstoff-Stirnfläche mit der Fläche der ersten Brennstoff-Stirnfläche identisch.
   In Ausführungsformen, in denen das auslenkbare Element als Doppelkolben ausgebildet ist, ist es ein Grössenverhältnis der Kolben (und die Durchmesser der Hohlräume, in denen sich die Kolbenköpfe bewegen), die dazu führen, dass die erste und zweite Fluid-Stirnfläche von der ersten und zweiten Brennstoff-Stirnfläche verschieden sind.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig.1: Eine schematische Darstellung eines Systems, das verschiedene Alternativen zur Minimierung von Druckschwankungen aufweist;
- Fig. 2: Eine schematische Darstellung eines Systems, das eine andere Kombination von Alternativen zur Minimierung von Druckschwankungen aufweist

Die nachfolgend gezeigten Systeme sind für ein Aufrüsten einer benzinbetriebenen Kraftstoffanlage auf Benzin-LPG Bi-Fuel-Betrieb ausgelegt. Das heisst, die Systeme sind für Benzin als Fluid 52 und LPG als Brennstoff ausgelegt. Für eine bessere Verständlichkeit der in den Figuren gezeigten Ausführungsformen kann also Fluid mit Benzin und Brennstoff mit LPG gleichgesetzt werden. Allerdings dienen diese Gleichsetzungen nur zur Veranschaulichung und analoge Systeme können auf andere Fluide und andere Brennstoffe ausgelegt sein. Insbesondere sind Brennstoffe wie beispielsweise Flüssiggas, Liquefied Natural Gas (LNG), alle flüssig brennbaren Stoffe (Biodiesel, Pflanzenöl, Alkohol, Ethanol etc.), verdichtetes Erdgas (Compressed Natural Gas, CNG) aber auch Gemische aus verschiedenen Kraftstoffen) denkbar.

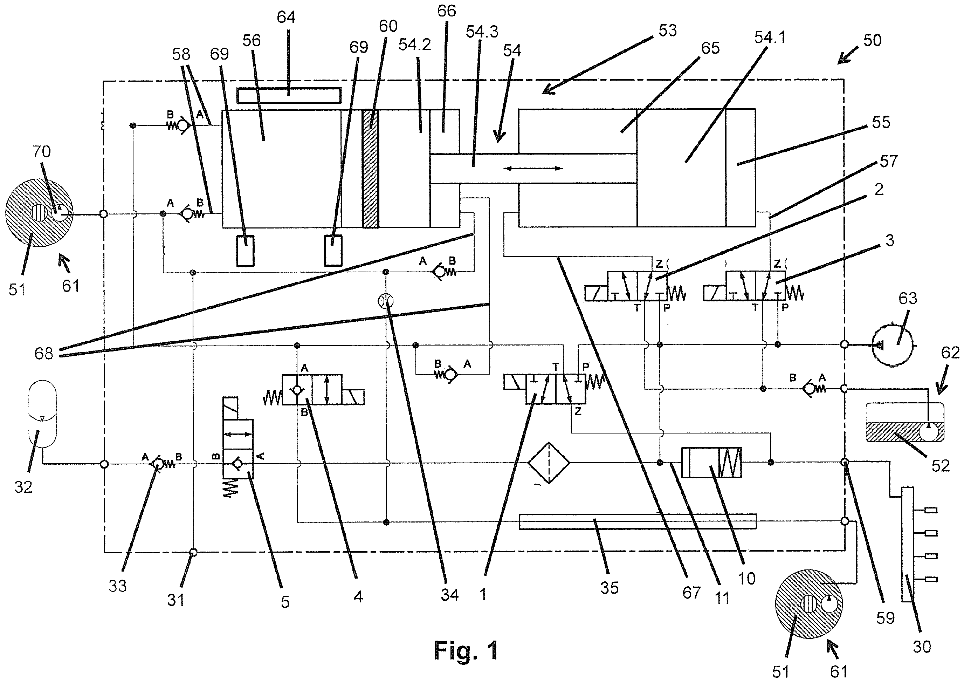

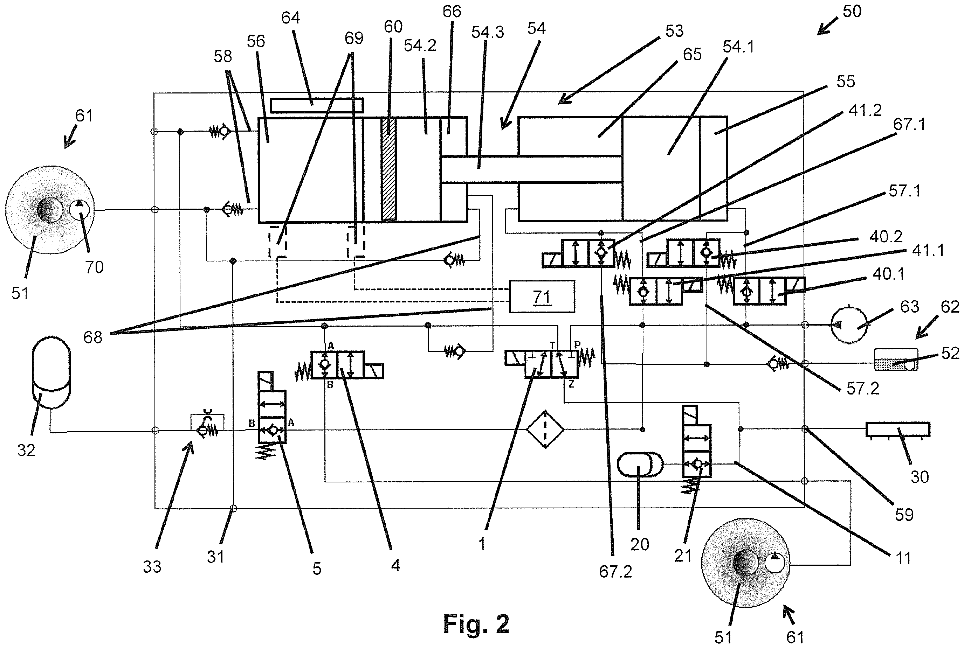

**Figur 1** zeigt innerhalb des strichpunktierten Rechtecks eine Ausführungsform des Systems 50. Ausserhalb des strichpunktierten Rechtecks sind Elemente einer Kraftstoffanlage, beziehungsweise einer Kraftstoffmaschine, dargestellt, mit welchen das System 50 nach dessen Integration in die Kraftstoffanlage interagiert. In der Regel ist der ausserhalb des Rechtecks dargestellte Brennstoff-Tank 51 und der ausserhalb des Rechtecks dargestellte Druckspeicher 32 zum System 50 gehörend, wobei das System in der Regel nur einen Brennstoff-Tank 51 aufweist. Bei den Figuren 1 und 2 gezeigten beiden Brennstoff-Tanks 51 handelt es sich um denselben Brennstoff-Tank 51.

Das gezeigte System weist einen Medienwandler 53 mit einem auslenkbaren Element in Form eines Doppelkolbens 54 auf. Der Doppelkolben 54 weist einen ersten Kolbenkopf 54.1 in einem ersten Hohlraum und einen zweiten Kolbenkopf 54.2 in einem zweiten Hohlraum auf. Die beiden Kolbenköpfe sind über eine Kolbenkopfverbindung 54.3 so miteinander verbunden, dass sie eine synchrone Bewegung ausführen.

In der gezeigten Ausführungsform bildet der erste Kolbenkopf 54.1 ein erstes, entlang der Bewegungsrichtung des auslenkbaren Elements 54 ausgerichtetes Ende des auslenkbaren Elements 54 und der zweite Kolbenkopf 54.2 bildet ein zweites, entlang der Bewegungsrichtung des auslenkbaren Elements 54 ausgerichtetes Ende des auslenkbaren Elements 54.

Erster und zweiter Kolbenkopf sind so innerhalb des ersten und zweiten Hohlraums angeordnet, dass jeweils zwei Kammern gebildet sind, die fluiddicht gegeneinander abgeschlossen sind und deren Volumen sich durch die Bewegung des entsprechenden Kolbenkopfes entgegengesetzt ändern.

Das System gemäss der gezeigten Ausführungsform weist ein Leitungssystem auf, dass derart ausgelegt ist, dass dem erste Hohlraum, beziehungsweise den beiden darin befindlichen Kammern, nur Fluid 52 zuführbar ist, und dass dem zweiten Hohlraum, beziehungsweise den beiden darin befindlichen Kammern, nur Brennstoff 51 zuführbar ist. In anderen Worten: Eine erste Kammer des ersten Hohlraums bildet ein erstes Volumen 55 für das Fluid 52 und die zweite Kammer des ersten Hohlraums bildet ein zweites Volumen 65 für das Fluid. Analog bildet eine erste Kammer des zweiten Hohlraums ein erstes Volumen 56 für den Brennstoff 51 und die zweite Kammer des zweiten Hohlraums bildet ein zweites Volumen 66 für den Brennstoff.

Um besagte Zuführung von Fluid 52 und Brennstoff 51 zu gewährleisten, weist das Leitungssystem eine erste Fluid-Zu-/Ableitung 57, eine zweite Fluid-Zu-/Ableitung 67, eine erste Brennstoff-Zu-/Ableitung 58 und eine zweite Brennstoff-Zu-/Ableitung 58 auf.

In der gezeigten Ausführungsform besteht die erste Fluid-Zu-/Ableitung 57 aus einer Leitung, über die sowohl die Zuleitung in das erste Volumen 55 für das Fluid als auch die Ableitung aus demselben erfolgt. Zu- und Ableitung werden über ein 3/2-Wegeventil 3 gesteuert. Analog besteht die zweite Fluid-Zu-/Ableitung 67 aus einer Leitung, über die sowohl die Zuleitung in das zweite Volumen 65 für das Fluid als auch die Ableitung aus demselben erfolgt. Diese Zu- und Ableitung werden über ein weiteres 3/2-Wegeventil 2 gesteuert.

Im Gegensatz dazu weist die erste Brennstoff-Zu-/Ableitung 58 eine Zuleitung in das erste Volumen 56 für den Brennstoff und eine von dieser Zuleitung verschiedene Ableitung aus dem ersten Volumen 56 für den Brennstoff auf. Der Fluss von Brennstoff in die Zu- beziehungsweise Ableitung ist durch den Einsatz von je einem Rückschlagventil festgelegt.

Analog weist die zweite Brennstoff-Zu-/Ableitung 68 eine Zuleitung in das zweite Volumen 66 für den Brennstoff und eine von dieser Zuleitung verschiedene Ableitung aus dem zweiten Volumen 66 für den Brennstoff auf. Der Fluss von Brennstoff in die Zu- beziehungsweise Ableitung ist durch den Einsatz von je einem Rückschlagventil festgelegt.

Das gezeigte System weist ferner einen Brennstoff-Tank 61 mit einer Förderpumpe auf. Die Förderpumpe fördert Brennstoff in das Leitungssystem, insbesondere in den Niederdruckbereich und in den Medienwandler-Vorlauf.

Ferner weist das gezeigte System eine Rücklaufleitung auf, über die Brennstoff in den Brennstoff-Tank zurückbefördert werden kann. Die Rücklaufleitung kann an den brennstoffseitigen Niederdruckbereich und/oder den brennstoffseitigen Hochdruckbereich des Leitungssystems angreifen.

Das gezeigte System weist ferner eine Kraftstoffaustauscheinheit auf, die in der gezeigten Ausführungsform einen Druckspeicher 32 aufweist.

Während des Betriebs der Kraftstoffmaschine mit Fluid wird der Druckspeicher 32 über ein Druckspeicherventil 5 mit Fluid 52 befüllt. Das Druckspeicherventil 5 ist so geschaltet, dass der Druckspeicher 32 während des Betriebs der Kraftstoffmaschine mit Brennstoff 51 vom Rest des Systems 50 getrennt ist. Insbesondere wird ein Ablassen aus dem Druckspeicher 32 oder eine Reduktion des Drucks des im Druckspeicher 32 befindlichen Fluids verhindert. Dadurch steht nach dem Abschalten der Kraftstoffmaschine unter Hochdruck stehendes Fluid zur Verfügung, mit welchem die Leitungen des Hochdruckbereichs des Systems, die Zuleitungen der Kraftstoffanlage zum Einspritzsystem 30 und das Einspritzsystem 30 geflutet werden können.

Die gezeigte Kraftstoffaustauscheinheit kann insbesondere dazu verwendet werden, um Probleme beim Starten der Kraftmaschine zu verhindern. Solche Probleme treten insbesondere dann auf, wenn die Kraftmaschine vor dem Ausschalten mit Brennstoff betrieben wurde.

In der gezeigten Ausführungsform ist d-em Druckspeicher 32 ein Rückschlagventil 33 mit einer parallelen Blende (siehe auch Figur 2), beziehungsweise ein Plattenventil mit einer Bohrung vorgeschalten. Dies erlaubt ein langsames Befüllen des Druckspeichers 32 und ein rasches Entleeren desselben über ein Druckspeicherventil 5.

Letztlich verfügt die Ausführungsform gemäss Figur 1 um einen Drucksensor 31, der angeordnet ist, einen Druck im Niederdruckbereich des Brennstoffes 51 zu messen.

In Figur 1 sind die folgenden Bauteile der ursprünglichen Kraftstoffanlage, beziehungsweise der ursprünglichen Kraftmaschine, gezeigt: Ein Fluid-Tank 62, eine Hochdruckpumpe 63 und ein Einspritzsystem 30.

Damit Brennstoff 51 und Fluid 52 dem Einspritzsystem 30 zugeführt werden kann, weist das System 50 einen entsprechend angeordneten Anschluss 59 zum Einspritzsystem 30 hin auf.

Ein Umschaltventil 1, in der gezeigten Ausführungsform ein 3/2-Wegeventil, ist so im System positioniert, dass ein Umschalten von Fluid-Betrieb der Kraftstoffmaschine auf Brennstoff-Betrieb und umgekehrt über einen Zustandswechsel des Umschaltventils 1 erfolgen kann. In anderen Worten: Das Umschaltventil 1 ist so positioniert und geschalten, dass in einem ersten Zustand (in einer ersten Stellung) des Umschaltventils 1 Brennstoff zum Anschluss 59 geleitet wird und im einem zweiten Zustand des Umschaltventils 1 Fluid zum Anschluss 59 geleitet wird.

Aus Sicherheitsgründen kann der zweite Zustand des Umschaltventils 1 der nichtbestromte Zustand sein.

Die in Figur 1 gezeigte Ausführungsform weist folgende Elemente zur Minimierung von unerwünschten Druckschwankungen auf:
- Ein Kompensationselement 10 in Form eines Kompensationskolbens, wobei eine Zuleitung 11 des Kompensationskolbens dem Umschaltventil 1 vorgeschalten ist.
   In der gezeigten Ausführungsform gehen Zuleitungen zu den 3/2-Wegeventilen, über welche die erste Fluid-Zu-/Ableitung und die zweite Fluid-Zu-/Ableitung gesteuert werden, von einem dem Umschaltventil 1 vorgelagerten Teilbereich des Leitungssystems ab, wobei sowohl zwischen den Zuleitungen zu den Wegeventilen als auch zwischen den Zuleitungen zu den Wegeventilen und der Zuleitung 11 des Kompensationskolbens 10 keine weiteren, insbesondere keine weiteren aktive Elemente des Systems angeordnet sind.
   Eine solche Anordnung ermöglicht eine Minimierung von Druckschwankungen, wie sie beispielsweise durch das Schalten der 3/2-Wegeventile und/oder durch die Hochdruckpumpe 63 der Kraftstoffanlage erzeugt werden können.
- Ein Mittel zur Überwachung der Stellung des als Doppelkolben realisierten auslenkbaren Elements 54.
   In der gezeigten Ausführungsform weist das Mittel einen im zweiten Kolbenkopf 54.2 integrierten, magnetischen Bereich in Form eines Magneten sowie einen Linearwegeaufnehmer 64 auf.
- Eine hydraulische Zwangsschaltung aufweisend in Bauteil 69, das gegenüber einem Magnetfeld sensitiv ist, ein am auslenkbaren Element angebrachten magnetischen Bereich 60, ein Druckspeicher (nicht gezeigt) für das Steuermedium und entsprechend eingerichtete erste und zweite Fluid-Zu-/Ableitungen.
   In der gezeigten Ausführungsform handelt es sich beim Bauteil 69, das gegenüber einem Magnetfeld sensitiv ist um einen REED-Schalter.
   Ein solches Bauteil 69, beziehungsweise ein solcher Schalter, dient in der gezeigten Ausführungsform zum Hinzuschalten des Druckspeichers (nicht gezeigt), der über das Ablassen eines Steuermediums das Ventil 3 zur ersten Fluid-Zu-/Ableitung 57 und das Ventil 2 zur zweiten Fluid-Zu-/Ableitung 67 schaltet..
- Eine Kühlvorrichtung, die einen Bereich des Systems oder der Kraftstoffanlage kühlt. Die gezeigte Kühlvorrichtung ist sowohl über ein Ventil 4 aus dem Hochdruckbereich des Brennstoffs 51 heraus, als auch aus dem Niederdruckbereich des Brennstoffes 51 heraus mit flüssigem Brennstoff versorgbar.
   Es versteht sich, dass die Kühlvorrichtung auch nur aus dem Hochdruckbereich heraus oder nur aus dem Niederdruckbereich heraus mit Brennstoff versorgbar ist. Insbesondere bei Ausführungsformen des Systems, bei welchem der Druck des Brennstoffs 51 im Niederdruckbereich des Systems erhöht wird, um Blasenbildung zu vermeiden, muss allenfalls auf eine Versorgung der Kühlvorrichtung aus dem Niederdruckbereich heraus verzichtet werden.
   Die Kühlvorrichtung weist in der gezeigten Ausführungsform einen Strömungskanal 35, insbesondere eine Kühlbohrung auf. Die Kühlbohrung ist insbesondere in demjenigen Bauteil des Systems oder der Kraftstoffanlage angeordnet, das gekühlt werden soll. Beim Bauteil kann es sich insbesondere um den Medienwandler 53 handeln.
   Insbesondere bei einem Versorgen der Kühlvorrichtung aus dem Niederdruckbereich heraus weist die Kühlvorrichtung eine Düse 34 auf und das Leitungssystem ist ausgelegt, flüssigen Brennstoff 51 über die Düse 34 in den Strömungskanal 35 zu leiten. Im Strömungskanal verflüchtigt sich der flüssige Brennstoff 51, wodurch eine Kühlwirkung entsteht.

Die in **Figur 2** gezeigte Ausführungsform des Systems 50 unterscheidet sich in erster Linie in den Elementen zur Minimierung von unerwünschten Druckschwankungen vom System gemäss Figur 1.

Die in Figur 2 gezeigte Ausführungsform weist folgende Elemente zur Minimierung von unerwünschten Druckschwankungen auf:
- Die Zuleitung zum ersten Volumen 55 für das Fluid und die Ableitung aus dem ersten Volumen 55 für das Fluid wird durch ein erstes Paar an 2/2-Wegeventilen und die Zuleitung zum zweiten Volumen 65 für das Fluid und die Ableitung aus dem zweiten Volumen 65 für das Fluid wird durch ein zweites Paar an 2/2-Wegeventilen gesteuert.
   Dazu weist die erste Fluid-Zu-/Ableitung 57 einen ersten Bereich 57.1 auf, der nur der Zuleitung in das erste Volumen 55 für das Fluid dient, und einen zweiten Bereich 57.2 auf, der nur der Ableitung aus dem ersten Volumen 55 für das Fluid dient. Analog weist die zweite Fluid-Zu-/Ableitung 67 einen ersten Bereich 67.1 auf, der nur der Zuleitung in das zweite Volumen 65 für das Fluid dient, und einen zweiten Bereich 67.2 auf, der nur der Ableitung aus dem zweiten Volumen 65 für das Fluid dient.
   Ein erstes Ventil 40.1 des ersten Paar an 2/2-Wegeventilen ist auf dem ersten Bereich 57.1 der ersten Fluid-Zu-/Ableitung angeordnet. Es ist eingerichtet, die Zuleitung von Fluid in das erste Volumen 55 für das Fluid zu regeln.
   Das zweite Ventil 40.2 des ersten Paar an 2/2-Wegeventilen ist auf dem zweiten Bereich 57.2 der ersten Fluid-Zu-/Ableitung angeordnet. Es ist eingerichtet, die Ableitung von Fluid in das erste Volumen 55 für das Fluid zu regeln.
   Ein erstes Ventil 41.1 und das zweite Ventil 41.2 des zweiten Paar an 2/2-Wegeventilen ist entsprechend auf dem ersten Bereich 67.1, beziehungsweise auf dem zweiten Bereich 67.2 der zweiten Fluid-Zu-/Ableitung angeordnet. Diese Ventile sind eingerichtet, die Zu- beziehungsweise Ableitung von Fluid in das zweite Volumen 65 für das Fluid zu regeln.
   Das System weist ferner eine Steuerung 71 auf, die eingerichtet ist, das erste Ventil 40.1 und das zweite Ventil 40.2 des ersten Paars an 2/2-Wegeventilen sowie das erste Ventil 41.1 und das zweite Ventil 41.2 des zweiten Paars an 2/2-Wegeventilen so zu steuern, dass ein Umschaltloch minimiert wird. Optional kann die Steuerung als hydraulische Zwangsschaltung wie zuvor beschrieben ausgelegt sein oder sie kann die hydraulische Zwangsschaltung umfassen. In diesem Fall kann die Steuerung das Bauteil 69, das gegenüber einem Magnetfeld sensitiv ist, umfassen.
- Ein Kompensationselement aufweisend einen Druckspeicher 20 und ein Regelventil 21 in Form eines 2/2-Wegeventils, über welches die Befüllung und/oder Entleerung des Druckspeichers 20 erfolgt, wobei das Kompensationselement dem Umschaltventil 1 nachgeschalten ist und wobei das Kompensationselement dem Anschluss 59 vorgeschalten ist.
   Durch diese Positionierung kann das Kompensationselement im Prinzip eingerichtet sein, unerwünschte Druckschwankungen im Fluid oder unerwünschte Druckschwankungen im Brennstoff oder -je nach Stellung des Umschaltventils 1 - unerwünschte Druckschwankungen des Fluids und des Brennstoffes zu minimieren.
   In der gezeigten Ausführungsform ist das Kompensationselement eingerichtet, unerwünschte Druckschwankungen des Brennstoffes zu minimieren. Das Kompensationselement ist deshalb dahingehend eingerichtet, weil in der gezeigten Ausführungsform des Systems das Fluid 52 bei Fluid-Betrieb der Kraftstoffanlage lediglich von einem Eingang des Systems über das Umschaltventil 1 auf den Anschluss 59 leitet. Das System hat folglich keinen (oder allenfalls einen vernachlässigbaren) Einfluss auf die Eigenschaften des von der Kraftstoffanlage geförderten Fluids. Im Gegensatz dazu wird der Brennstoff 51 über den Medienwandler 53 mit Hochdruck beaufschlagt. Entsprechend kann der Brennstoff unerwünschte Druckschwankungen aufweisen, die durch das entsprechend eingerichteten Kompensationselement minimierbar sind.
- Das System weist eine Brennstoff-Förderpumpe 70 auf, die eingerichtete ist, den Brennstoff 51 im Niederdruckbereich des Systems 50 mit zusätzlichem Druck zu beaufschlagen, um Dampfbildung aufgrund von Wärmeabstrahlung durch den Medienwandlers 53 zu verhindern.
   In der gezeigten Ausführungsform handelt es sich bei der Brennstoff-Förderpumpe 70 um die in oder am Brennstoff-Tank 61 angebrachte Brennstoff-Förderpumpe. Diese ist eingerichtet, an ihrem Ausgang einen Druck zu erzeugen, der beispielsweise um etwa 15 Bar höher ist, als der Druck, den Standard-Brennstoff-Förderpumpen erzeugen.
   Um den im Vergleich zu Systemen ohne zusätzliche Druckerhöhung des Brennstoffs im Niederdruckbereich des Systems höheren Druck aufrechtzuerhalten, weist das in Figur 2 gezeigte System keine Rücklaufleitung aus dem Niederdruckbereich zum Brennstoff-Tank 61 auf.

Die in den Figuren 1 und 2 gezeigten Kombinationen von Alternativen zur Minimierung von Druckschwankungen sind als beispielhafte Kombinationen zu verstehen. Grundsätzlich ist jede Kombination der in diesem Text beschriebenen acht Alternativen denkbar. Insbesondere kann ein System auch nur eine der beschriebenen Alternativen aufweisen.

## Patentansprüche

1. System (50) zur Förderung eines Brennstoffes (51) in einer Kraftstoffanlage, wobei das System eingerichtet ist, einen Bi-Fuel Betrieb der Kraftstoffanlage zu ermöglichen, aufweisend
• einen Medienwandler (53), der dazu eingerichtet ist, einen Förderdruck eines Fluids (52) auf den Brennstoff (51) zu übertragen, wobei der Medienwandler ein auslenkbares Element (54), ein erstes Volumen (55) für das Fluid und ein erstes Volumen (56) für den Brennstoff aufweist;
• eine erste Fluid-Zu-/Ableitung (57) und eine erste Brennstoff-Zu-/Ableitung (58), wobei die erste Fluid-Zu-/Ableitung (57) angeordnet ist, Fluid (52) dem erste Volumen (55) für das Fluid zubeziehungsweise abzuführen, und wobei die erste Brennstoff-Zu-/Ableitung (58) angeordnet ist, Brennstoff (51) dem erste Volumen (56) für den Brennstoff zu- beziehungsweise abzuführen;
• einen Anschluss (59), über den das System mit der Kraftstoffanlage verbindbar ist,
• ein Umschaltventil (1), das angeordnet ist, ein Leiten von Fluid auf den Anschluss (59) zu verhindern,
**dadurch gekennzeichnet dass** das System (50) eingerichtet ist, eine unerwünschte Druckschwankung zu minimieren, indem das System mindestens eine der folgenden Merkmale aufweist:
• ein Kompensationselement (10) und eine Zuleitung (11) zum Kompensationselement (10), wobei die Zuleitung (11) dem Umschaltventil (1) vorgeschalten ist;
• der Medienwandler (53) weist ein zweites Volumen (65) für das Fluid und das System eine zweite Fluid-Zu-/Ableitung (67), ein erstes Paar (40) an 2/2-Wegeventilen und ein zweites Paar (41) an 2/2-Wegeventilen auf, wobei die zweite Fluid-Zu-/Ableitung (67) angeordnet ist, Fluid (52) dem zweite Volumen (65) für das Fluid zubeziehungsweise abzuführen, und wobei
- die erste und zweite Fluid-Zu-/Ableitung je einen Bereich aufweisen, der nur der Zuleitung dient, und je einen Bereich aufweisen, der nur der Ableitung dient,
- eines der beiden 2/2-Wegeventile des ersten Paars (40) an 2/2-Wegeventilen am Bereich der ersten Fluid-Zu-/Ableitung (57) angeordnet ist, der nur der Zuleitung dient, und das andere der beiden 2/2-Wegeventile des ersten Paars (40) an 2/2-Wegeventilen am Bereich der ersten Fluid-Zu-/Ableitung (57) angeordnet ist, der nur der Ableitung dient,
- eines der beiden 2/2-Wegeventile des zweiten Paars (41) an 2/2-Wegeventilen am Bereich der zweiten Fluid-Zu-/Ableitung (67) angeordnet ist, der nur der Zuleitung dient, und das andere der beiden 2/2-Wegeventile des zweiten Paars (41) an 2/2-Wegeventilen am Bereich der zweiten Fluid-Zu-/Ableitung (67) angeordnet ist, der nur der Ableitung dient.
• ein Kompensationselement (20), wobei das Kompensationselement dem ersten Volumen (56) für den Brennstoff nachgeschalten ist;
• eine Pumpe, die den Brennstoff (51) in einem Niederdruckbereich des Systems (50) mit einem zu einem Brennstoff-Förderdruck zusätzlichen Druck beaufschlägt, um einen Wärmeeinfluss auf den Brennstoff zu kompensieren.;
• eine hydraulische Zwangsschaltung, wobei das auslenkbare Element (54) einen magnetischen Bereich (60) aufweist und die hydraulische Zwangsschaltung auslösbar ist, wenn der magnetische Bereich eine vordefinierte Position einnimmt oder durchquert;
• Mittel zur Überwachung einer Stellung des auslenkbaren Elements, wobei dieses Mittel einen magnetischen Bereich (60) am auslenkbaren Element umfasst und wobei die Stellung von einer Stellung einer maximalen Auslenkung und einer Ruhestellung verschieden ist.

2. System gemäss Anspruch 1, wobei das Umschaltventil (1) so angeordnet ist, dass sowohl Fluid (52) als auch Brennstoff (51) über das Umschaltventil (1) zum Anschluss (59) förderbar sind.

3. System gemäss Anspruch 2, wobei das System das Kompensationselement (20), welches dem ersten Volumen (56) für den Brennstoff nachgeschalten ist, aufweist und wobei das Kompensationselement (20) dem Umschaltventil (1) nachgeschalten ist.

4. System gemäss einem der vorangehenden Ansprüche, wobei das System die hydraulische Zwangsschaltung aufweist und eingerichtet ist, dass der magnetische Bereich (60) in der vordefinierten Position oder beim Durchqueren der vordefinierten Position einen Pilotimpuls erzeugt, und wobei das System eingerichtet ist, ein Ventil des Systems zu schalten, nachdem der Pilotimpuls erzeugt wurde.

5. System gemäss Anspruch 4, wobei die hydraulische Zwangsschaltung ein Bauteil (69), das sensitiv für ein magnetisches Feld ist, und einen Druckspeicher, in dem ein Steuermedium beherbergt ist, aufweist, wobei die hydraulische Zwangsschaltung eingerichtet ist, Steuermedium in Richtung des Ventils des Systems abzulassen, wenn das Bauteil (69) die Einnahme oder das Durchqueren der vordefinierten Position durch den magnetischen Bereich (60) feststellt, und wobei das abgelassene Steuermedium geeignet ist, ein Schalten des Ventils zu bewirken.

6. System gemäss einem der Ansprüche 1-3, wobei das System die hydraulische Zwangsschaltung und ein Magnetventil aufweist und wobei der magnetische Bereich (60) in der vordefinierten Position am Ort des Magnetventils ein Magnetfeld erzeugt, das ausreichend ist, ein Schalten des Magnetventils zu bewirken.

7. System gemäss einem der vorangehenden Ansprüche, wobei der Medienwandler (53) ein Druck-Volumen-Wandler ist.

8. System gemäss Anspruch 7, wobei das auslenkbare Element (54) als Doppelkolben aufweisend zwei Kolbenköpfe (54.1, 54.2) ausgebildet ist und wobei ein Grössenverhältnis der Kolbenköpfe ungleich eins ist.

9. System gemäss Anspruch 8, wobei das Grössenverhältnis der Kolbenköpfe (54.1, 54.2) derart ist, dass das pro Kompressionszyklus des Medienwandlers (53) geförderte Volumen des Brennstoffes (51) grösser ist als das den Kompressionszyklus bewirkende Volumen des Fluids (52).

10. System gemäss Anspruch 8 oder 9, wobei das System eine Brennstoff-Förderpumpe (70) aufweist, die eingerichtet ist, den Brennstoff (51) im Medienwandler-Vorlauf so zu ändern, dass eine durch das Grössenverhältnis der Kolbenköpfe (54.1, 54.2) verursachte Abweichung des Brennstoff-Drucks von einem Solldruck im Hochdruckbereich des Systems kompensierbar ist.

11. System gemäss einem der vorangehenden Ansprüche, wobei das System eine Kühlvorrichtung aufweist, die einen Strömungskanal (35) umfasst, der so angeordnet ist, dass Brennstoff (51) in den Strömungskanal (35) eintreten kann und der eingerichtet ist, eine Druckreduktion des Brennstoffes zuzulassen.

12. System gemäss einem der vorangehenden Ansprüche, wobei das System die Pumpe, die den Brennstoff (51) im Niederdruckbereich des Systems mit einem zum Brennstoff-Förderdruck zusätzlichen Druck beaufschlägt, und einen Brennstoff-Tank (61) mit einer Brennstoff-Förderpumpe (70) aufweist, wobei die Brennstoff-Förderpumpe (70) die Pumpe ist, die den Brennstoff (51) im Niederdruckbereich des Systems mit einem zum Brennstoff-Förderdruck zusätzlichen Druck beaufschlägt.

13. System gemäss einem der vorangehenden Ansprüche, wobei das System ein Leitungssystem aufweist und wobei das Leitungssystem im Niederdruckbereich keine Rückführleitung zu einem Brennstoff-Tank (61) aufweist.

14. System gemäss einem der vorangehenden Ansprüche, wobei das System das Mittel zur Überwachung einer Stellung des auslenkbaren Elements (54) aufweist und wobei das Mittel ferner einen Wegaufnehmer aufweist, der parallel zur Auslenkrichtung des auslenkbaren Elements (54) angeordnet ist.

15. System gemäss einem der vorangehenden Ansprüche, ferner aufweisend eine Kraftstoffaustauscheinheit, wobei die Kraftstoffaustauscheinheit einen Druckspeicher (32) und ein Rückschlagventil (33) mit einer parallel geschalteten Blende aufweist, wobei das Rückschlagventil (33) mit parallel geschalteter Blende so angeordnet ist, dass eine Befüllung und Entleerung des Druckspeichers (32) über das Rückschlagventil (33) mit parallel geschalteten Blende erfolgt.
